# FASCICULE DE BREVET EUROPEEN

(11) **EP 3 948 387 B1**
(45) Date de publication et mention de la délivrance du brevet: **05.07.2023**
(21) Numéro de dépôt: 21731249.5
(22) Date de dépôt: 11.05.2021
(51) Int. Cl.: G02B 7/183, G02B 7/185

(54) **FIXATION D'UN MIROIR SUR UN SUPPORT**
BEFESTIGUNG EINES SPIEGELS AN EINEM TRÄGER
FASTENING OF A MIRROR TO A SUPPORT

(30) Priorité: 20.05.2020 FR 2005321
(43) Date de publication de la demande: 09.02.2022
(73) Titulaire: Airbus Defence and Space SAS, 31402 Toulouse Cedex 4 (FR)
(72) Inventeur: CASTEL, Didier, 31402 Toulouse Cedex 4 (FR); CHAUMEIL, Frédéric, 31402 Toulouse Cedex 4 (FR); CARMINATI, Lionel, 31402 Toulouse Cedex 4 (FR)
(74) Mandataire: Plasseraud IP
(86) Numéro de dépôt international: PCT/FR2021/050814
(87) Numéro de publication internationale: WO 2021/234247

(56) Documents cités:
- WO-A1-2008/122313
- FR-A1- 2 773 890
- US-A- 4 655 563
- US-A1- 2014 268 380

## Description

### Domaine technique

La présente description concerne un système de fixation d'un miroir sur un support, un instrument qui incorpore un tel système de fixation, ainsi qu'un procédé d'ajustement de l'instrument.

### Technique antérieure

Il est bien connu que la qualité des images qui sont formées par un instrument d'imagerie peut être dégradée par des déformations qui affectent certains composants optiques de l'instrument, tels que des miroirs, et qui sont produites involontairement lors de l'assemblage de l'instrument ou antérieurement pendant la production de ces composants. Ces dégradations de la qualité d'imagerie résultent notamment de l'étape de fixation d'au moins l'un des composants optiques sur un support de ce composant. En effet, cette étape de fixation est susceptible de produire des contraintes permanentes dans le composant, qui provoquent des déformations d'une surface optique de celui-ci. Ces déformations de surface optique, même si elles correspondent à des déplacements de l'ordre de 10 nm (nanomètre), sont responsables de la dégradation de la qualité optique de l'instrument.

De même, il est connu que des variations dans des conditions de gravité auxquelles est soumis un instrument d'imagerie peuvent aussi provoquer des déformations de certains de ses composants optiques, et par suite générer une dégradation de la qualité d'imagerie. Tel est le cas pour un instrument d'imagerie entre un premier instant auquel il a été assemblé sur Terre, par exemple lorsque l'instrument est intégré à un satellite, et un instant de mission auquel l'instrument est utilisé à bord du satellite une fois que ce dernier est en orbite.

Souvent, pour ces deux causes de dégradation de qualité d'imagerie, les dégradations sont d'autant plus importantes que celui des composants optiques de l'instrument qui est l'objet des déformations involontaires possède de grandes dimensions. Ainsi, lorsque l'instrument est un télescope, le miroir primaire de ce télescope est tout particulièrement affecté. La principale aberration optique que présente alors l'instrument est le plus souvent de l'astigmatisme, mais d'autres aberrations telles qu'un trèfle, ou «trefoil» en anglais, peuvent aussi être générées.

Lorsque l'aberration optique est produite lors de l'assemblage de l'instrument, ou lors de son intégration dans une structure porteuse telle qu'un satellite, la fixation sur son support d'un des composants optiques de l'instrument qui est responsable de la dégradation de qualité d'imagerie, peut être recommencée avec des précautions supplémentaires afin de réduire les contraintes qui sont générées involontairement. Mais il en résulte des retards d'assemblage qui peuvent être très coûteux, et le gain en qualité d'imagerie à chaque répétition de l'assemblage n'est pas garanti.

Lorsque l'aberration optique est produite par une variation de condition de gravité, les déformations des composants optiques que provoque cette variation peuvent prises en compte lors de la conception de ces composants. Mais alors, il n'est pas possible d'optimiser la qualité d'imagerie de l'instrument une fois que son satellite porteur a été mis en orbite.

Ces difficultés ne sont pas limitées à un instrument d'imagerie, mais concernent de façon générale un instrument qui comprend au moins un miroir, quelle que soit la fonction de l'instrument. Un tel instrument possède en général une fonction de collecte de rayonnement, qui peut être combinée avec une autre fonction, telle qu'une utilisation du rayonnement collecté pour former une image ou pour détecter un signal qui est transmis par le rayonnement collecté. Dans le cas d'une fonction de détection, l'aberration optique qui est produite par la déformation du miroir peut être déterminée pour une longueur d'onde qui n'appartient pas au domaine spectral du rayonnement qui est concerné par l'utilisation de l'instrument. Néanmoins, l'aberration optique pour la longueur d'onde qui est utilisée pour déterminer cette aberration, caractérise la dégradation de la qualité selon laquelle l'instrument produit sa fonction. Le document FR2 773 890 - A1 divulgue un système de fixation d'un miroir sur son support, qui est constitué par trois dispositifs de montage à structures triangulaires, qui ont chacune au moins un bras de longueur variable. Ce système de fixation de FR2 773 890 - A1 permet de corriger la position du miroir à supporter selon six degrés de liberté. Par ailleurs, le document US 2014/0268380 A1 décrit un système d'ajustement de la forme d'un miroir, permettant de varier des tensions et des torsions qui sont réparties le long du bord périphérique du miroir.

### Problème technique

A partir de cette situation, un but de la présente invention est de permettre de corriger certaines déformations qui affectent un miroir, sans nécessiter que ce miroir soit démonté de son support.

Un but complémentaire de l'invention est qu'une correction qui est appliquée pour tenter de réduire une déformation du miroir, soit réversible afin de permettre de tester cette correction puis de la retirer si elle ne produit pas l'amélioration attendue pour le fonctionnement de l'instrument.

Un autre but complémentaire de l'invention est de proposer un mode de correction de déformations d'un miroir qui soit compatible avec les systèmes existants de fixation de miroirs, de préférence sans les affecter.

### Résumé de l'invention

Pour atteindre l'un au moins de ces buts ou un autre, un premier aspect de l'invention propose un nouveau système de fixation d'un miroir sur un support de ce miroir, qui comprend :
- au moins trois structures intermédiaires, destinées chacune à être connectée au support par une première interface de la structure intermédiaire, et à être connectée rigidement au miroir par une seconde interface de la structure intermédiaire, de façon à ce que les au moins trois structures intermédiaires réalisent ensemble une fixation rigide du miroir au support, les structures intermédiaires étant réparties angulairement autour d'un centre du miroir en étant distantes de ce centre.

De préférence, les structures intermédiaires peuvent produire une liaison isostatique entre le miroir et son support. En outre, ces structures intermédiaires peuvent être d'un modèle quelconque, par exemple de type bipode ou monopode. Dans le cas de structures intermédiaires de type bipode, trois structures sont nécessaires pour produire une liaison isostatique. Alternativement, six structures intermédiaires chacune de type monopode sont nécessaires pour produire encore une liaison isostatique.

Selon l'invention, le système de fixation comprend en outre au moins un dispositif de torsion, chaque dispositif de torsion étant dédié à une seule des structures intermédiaires et comprenant :
- au moins un élément élastique, qui possède deux extrémités, une première de ces extrémités étant reliée à la première interface de la structure intermédiaire, et une seconde de ces extrémités étant reliée rigidement à la seconde interface de la structure intermédiaire, l'élément élastique étant agencé pour appliquer un moment de torsion au miroir, directement ou à travers la seconde interface de la structure intermédiaire ; et
- un variateur, qui est couplé à l'élément élastique de façon à modifier une valeur du moment de torsion appliqué au miroir directement ou à travers la seconde interface de la structure intermédiaire.

Au sens de l'invention, on entend par moment de torsion qui est appliqué directement au miroir une configuration où la seconde extrémité de l'élément élastique est fixée sur le miroir. Dans une configuration où le moment de torsion est appliqué au miroir à travers la seconde interface de la structure intermédiaire, la seconde extrémité de l'élément élastique peut être reliée à un élément quelconque de cette seconde interface.

Ainsi, l'élément élastique produit le moment de torsion, conformément à un état en cours du variateur, et transmet ce moment de torsion au miroir ou à la seconde interface de la structure intermédiaire. Dans ce dernier cas, le moment de torsion est appliqué au miroir par cette seconde interface de la structure intermédiaire. De cette façon, l'invention ajoute à chaque structure intermédiaire, ou à certaines au moins de celles-ci, en plus de sa fonction de fixation du miroir sur le support, une fonction de transmission d'un moment de torsion au miroir. La valeur de ce moment de torsion peut être ajustée au moyen du variateur, d'une façon qui est rendue facile par la corrélation entre cette valeur du moment de torsion et une amplitude de déformation qui est produite par le variateur sur l'élément élastique. Il est ainsi possible d'ajuster le moment de torsion qui est appliqué au miroir pour compenser au moins partiellement un effort ou un moment involontaire qui serait appliqué au miroir du fait de sa fixation au support.

Un premier avantage du système de l'invention provient du fait qu'il n'est pas nécessaire de séparer à nouveau le miroir du support pour réduire les déformations du miroir qui sont provoquées par son assemblage au support. En effet, le système de l'invention permet un assemblage en deux phases successives. Lors de la première phase, le miroir est fixé au support au moyen des structures intermédiaires. Cette fixation peut générer des contraintes dans le miroir, et donc des déformations de sa surface optique. Mais lors d'une seconde phase, postérieure à la première, chaque variateur peut être ajusté afin d'appliquer un moment de torsion au miroir qui réduit ses déformations. L'assemblage du miroir avec son support ne nécessite donc pas d'être démonté puis remonté à plusieurs reprises pour parvenir à une faible déformation du miroir. Des gains importants de temps et de coût de main d'oeuvre en résultent.

Un deuxième avantage de l'invention résulte du fait que chaque dispositif de torsion présente un fonctionnement réversible. Ainsi, chaque variateur peut être placé dans un état initial pour produire une valeur d'essai pour le moment de torsion qui est appliqué au miroir à travers la structure intermédiaire correspondante. Puis, si la modification de la forme du miroir qui en résulte ne réduit pas sa déformation telle que provoquée par la première phase d'assemblage, l'état du variateur peut être modifié pour tester une autre valeur du moment de torsion. Le système de l'invention permet donc une correction progressive et empirique de la déformation du miroir.

Un troisième avantage de l'invention réside dans le fait qu'elle ne nécessite pas de modifier le miroir ni les structures intermédiaires, puisque chaque dispositif de torsion peut être ajouté à l'une des structures intermédiaires en la reliant de façon supplémentaire au support et au miroir. Des conceptions déjà disponibles pour le miroir, le support et les structures intermédiaires peuvent donc être reprises, sans nécessiter de nouveaux investissements de conception et de développement pour ces composants.

Le nombre de structures intermédiaires dans le système de fixation, qui sont munies de dispositifs de torsion selon l'invention, peut être quelconque. En particulier, le système de fixation peut comprendre deux ou trois structures intermédiaires qui sont munies chacune d'un dispositif de torsion indépendant de celui de chaque autre structure intermédiaire. Si deux structures intermédiaires de type bipode, pour une fixation isostatique du miroir sur son support, sont pourvues de dispositifs de torsion, des aberrations optiques du miroir de type astigmatisme peuvent être compensées. Si les trois structures intermédiaires de type bipode d'une fixation isostatique du miroir sur son support, sont pourvues de dispositifs de torsion, alors des aberrations optiques du miroir de type trèfle peuvent en plus être compensées.

De façon préférée, la première extrémité de l'élément élastique peut être reliée directement à la première interface de la structure intermédiaire. Toutefois, elle peut alternativement être reliée à la première interface de la structure intermédiaire par une partie du support qui est située entre cette première interface et un point de liaison de la première extrémité de l'élément élastique au support.

De même, la seconde extrémité de l'élément élastique peut être reliée directement à la seconde interface de la structure intermédiaire. Toutefois, elle peut alternativement être reliée à la seconde interface de la structure intermédiaire par une partie du miroir qui est située entre cette seconde interface et un point de liaison de la seconde extrémité de l'élément élastique au miroir.

Possiblement aussi, la liaison de la première extrémité de chaque élément élastique à la première interface de la structure intermédiaire correspondante ou au support, et/ou la liaison de la seconde extrémité de chaque élément élastique à la seconde interface de la structure intermédiaire correspondante ou au miroir, peut comprendre des pièces intermédiaires. Notamment, la liaison de la première extrémité de chaque élément élastique à la première interface de la structure intermédiaire correspondante ou au support peut comprendre une partie au moins du variateur.

Dans des premiers modes de réalisation de l'invention, chaque élément élastique peut comprendre une lame qui s'étend entre la première et la seconde extrémité de cet élément élastique. Alors, le variateur peut être agencé pour déplacer la première extrémité de façon à produire une déformation de la lame par flexion, cette déformation par flexion produisant, au niveau de la seconde extrémité, le moment de torsion qui est appliqué au miroir. Dans de tels premiers modes de réalisation, un matériau de l'élément élastique de chaque dispositif de torsion peut être identique à celui de la structure intermédiaire à laquelle ce dispositif de torsion est dédié. Une telle identité de matériau permet que la valeur du moment de torsion reste identique lorsqu'une température du système de fixation varie. D'une façon plus générale, chaque variateur peut posséder un fonctionnement mécanique ou à base d'au moins une cellule piézoélectrique, pour déplacer la première extrémité de l'élément élastique par rapport au support du miroir. La forme de l'élément élastique n'est alors pas limitée à celle d'une lame. Le fonctionnement du variateur peut être mécanique et adapté pour être actionné manuellement. Un tel réglage manuel peut être effectué initialement, c'est-à-dire avant que l'instrument qui comprend le miroir soit utilisé pour son application, par exemple avant d'être utilisé en mission à bord d'un satellite. Alternativement, le variateur peut être adapté pour être actionné à distance par l'intermédiaire d'une commande électrique qui est adressée à ce variateur. Il est alors possible d'actionner le variateur à distance et éventuellement à multiples reprises pendant la durée de vie de l'instrument, notamment alors que l'instrument est à bord d'un satellite en orbite.

Dans d'autres modes de réalisation de l'invention, chaque élément élastique peut comprendre un assemblage bilame à déformation thermique qui s'étend entre la première et la seconde extrémité de cet élément élastique. Alors, le variateur peut être adapté pour appliquer une variation de température à l'assemblage bilame, de sorte que ce dernier produise, au niveau de la seconde extrémité, le moment de torsion qui est appliqué au miroir en réponse à la variation de température.

De façon générale pour l'invention, chaque dispositif de torsion peut être agencé de sorte que le moment de torsion qui est appliqué au miroir en étant généré par ce dispositif de torsion, soit parallèle à un premier axe qui est dirigé vers le centre du miroir à partir d'un endroit du miroir qui est le plus proche de la structure intermédiaire à laquelle est dédié ce dispositif de torsion. Une telle configuration est plus particulièrement adaptée pour corriger des aberrations optiques du miroir de type astigmatisme.

Alternativement, chaque dispositif de torsion peut être agencé de sorte que le moment de torsion soit parallèle à un second axe qui est tangent à un bord périphérique du miroir à un endroit du miroir qui est le plus proche de la structure intermédiaire à laquelle est dédié ce dispositif de torsion. Une telle autre configuration est adaptée pour corriger des aberrations optiques du miroir de type trèfle, notamment.

De façon encore générale pour l'invention, chaque structure intermédiaire peut être connectée au miroir, par la seconde interface de cette structure intermédiaire, au niveau du bord périphérique du miroir. Dans ce cas, la seconde interface est adaptée pour appliquer le moment de torsion sur le bord périphérique du miroir. Toutefois, il est aussi possible que la seconde interface de chaque structure intermédiaire soit située dans le miroir à distance de son bord périphérique, notamment lorsque le miroir est de grande taille.

Un second aspect de l'invention propose un instrument d'optique ou de collecte de rayonnement, qui comprend un miroir, un support, et un système de fixation qui est conforme au premier aspect de l'invention. Le système de fixation connecte alors rigidement le miroir au support, au sein de l'instrument.

Un tel instrument peut former un télescope. Dans ce cas, le miroir qui est connecté au support par le système de fixation peut avantageusement être le miroir primaire du télescope. En effet, le miroir primaire d'un télescope est couramment celui qui est le plus grand dans ce télescope, et dont des déformations involontaires dégradent le plus la fonction optique du télescope. Toutefois, l'invention peut aussi être appliquée aux miroirs d'un télescope autres que son miroir primaire.

Enfin, un troisième aspect de l'invention concerne un procédé d'ajustement d'un instrument d'optique ou de collecte de rayonnement, suivant lequel cet instrument comprend un miroir, un support, et un système de fixation qui est conforme au premier aspect de l'invention. Le miroir est fixé rigidement sur le support au moyen des structures intermédiaires de l'instrument. Le procédé de l'invention comprend d'exécuter au moins une fois une séquence qui comprend les étapes suivantes :
/1/ caractériser au moins une aberration optique de l'instrument qui résulte au moins partiellement d'un écart de forme du miroir, par rapport à une forme de référence identifiée pour ce miroir ; et
/2/ pour au moins une des structures intermédiaires, ajuster le variateur du dispositif de torsion qui est dédié à cette structure intermédiaire, de façon à réduire l'au moins une aberration optique de l'instrument.

L'aberration optique qui est réduite en exécutant l'étape /2/ peut comprendre au moins un astigmatisme de l'instrument, un trèfle de l'instrument, ou une combinaison d'un astigmatisme et d'un trèfle de l'instrument. D'autres aberrations optiques, d'ordre supérieur, peuvent aussi être réduites de cette façon.

Lorsque ce procédé de l'invention est exécuté, l'instrument d'optique ou de collecte de rayonnement peut être installé à bord d'un satellite. Dans ce cas, la séquence qui comprend les étapes /1/ et /2/ peut être exécutée pendant une intégration de l'instrument dans le satellite, sur Terre avant le lancement du satellite. Alternativement, la séquence qui comprend les étapes /1/ et /2/ peut être exécutée ou répétée à bord du satellite après que celui-ci a été placé en orbite autour de la Terre.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1a] est une vue partielle en perspective d'un instrument qui correspond à un premier mode de réalisation de l'invention, dans lequel l'élément élastique est une lame qui est perpendiculaire à un bord périphérique de miroir ;
[Fig. 1b] est un agrandissement qui montre une structure intermédiaire de l'instrument de [Fig. 1a], avec le dispositif de torsion associé ;
[Fig. 1c] est un agrandissement supplémentaire qui montre le dispositif de torsion au sein de la structure intermédiaire de [Fig. 1b] ;
[Fig. 2] montre un deuxième mode de réalisation de l'invention, dans lequel l'élément élastique est une lame qui est parallèle à un bord périphérique de miroir ;
[Fig. 3] montre un troisième mode de réalisation de l'invention, dans lequel l'élément élastique est un assemblage bilame à déformation thermique ; et
[Fig. 4] est un diagramme des étapes d'un procédé conforme à l'invention, pour ajuster un instrument qui comprend un miroir.

### Description détaillée de l'invention

Pour raison de clarté, les dimensions des éléments qui sont représentés dans ces figures ne correspondent ni à des dimensions réelles, ni à des rapports de dimensions réels. En outre, des références identiques qui sont indiquées dans des figures différentes désignent des éléments identiques ou qui ont des fonctions identiques.

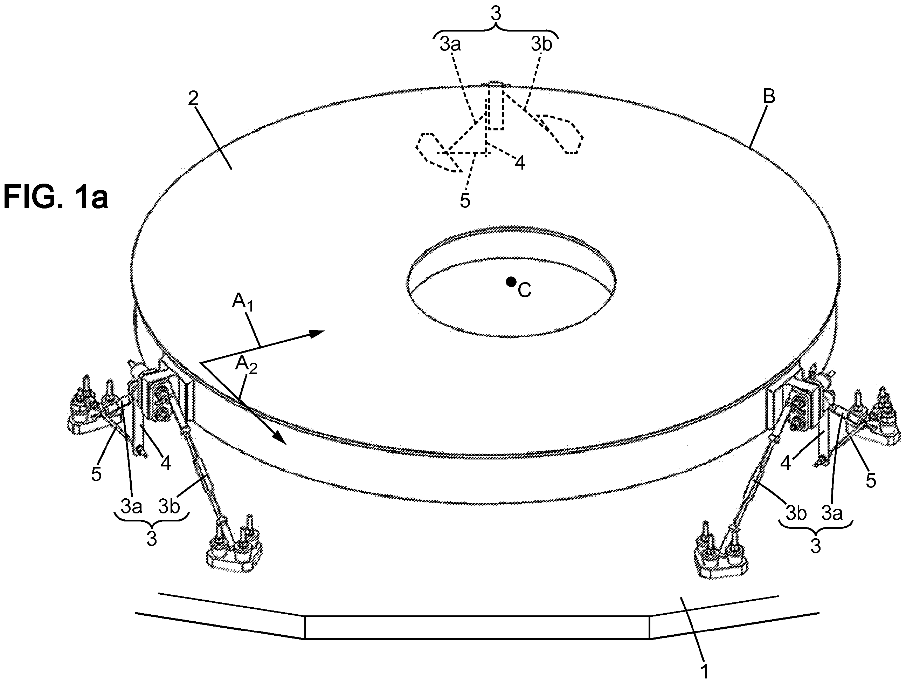

[Fig. 1a] montre certains éléments ou parties d'éléments d'un instrument conforme à l'invention. Cet instrument, qui peut être un télescope, comprend un support 1 et un miroir 2. Le miroir 2, qui peut être le miroir primaire du télescope, peut avoir un bord périphérique circulaire, désigné par la référence B. La référence C désigne l'emplacement d'un centre du miroir 2. En fonction de la conception de l'instrument, le miroir 2 peut avoir une ouverture centrale, et le centre C peut alors être situé dans cette ouverture centrale. Par exemple, le miroir 2 peut être en carbure de silicium (SiC), et son rayon peut être de l'ordre de plusieurs dizaines de centimètres.

Le support 1 peut être en un alliage à base de titane (Ti) et/ou d'aluminium (AI), par exemple. Ses dimensions peuvent être adaptées pour que le miroir 2 soit fixé au support 1 à plusieurs endroits du bord B, par exemple à trois endroits qui sont écartés deux-à-deux d'environ 120° (degrés) autour du centre C. Toutefois, une telle répartition angulaire des endroits de fixation du miroir 2 au support 1 n'est pas indispensable. Il suffit en effet que la répartition des endroits de fixation du miroir 2 au support 1 procure au miroir une stabilité suffisante, et réduise des vibrations qui pourraient affecter le miroir et/ou le support.

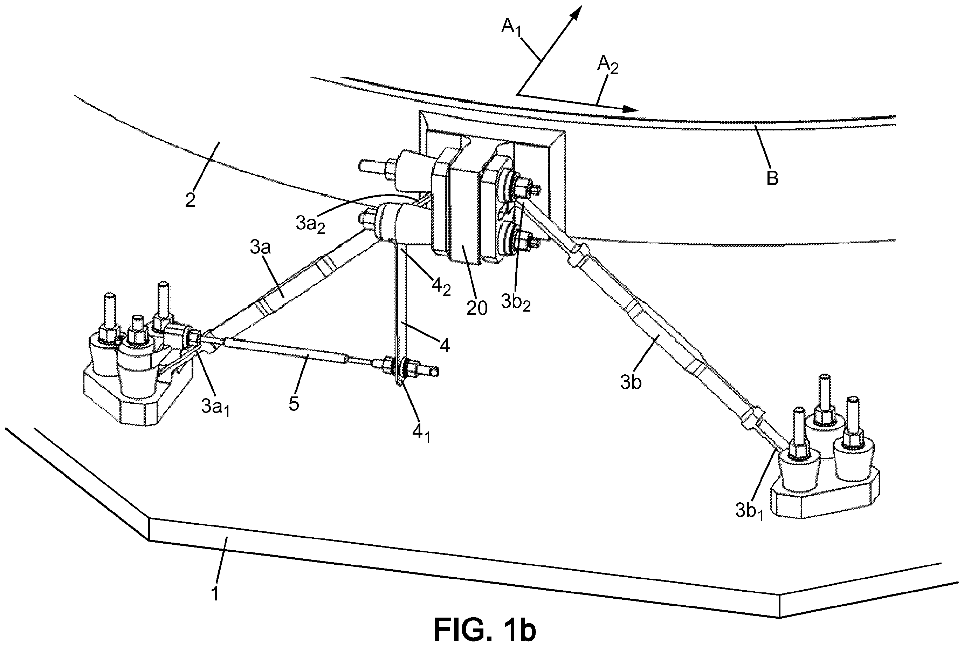

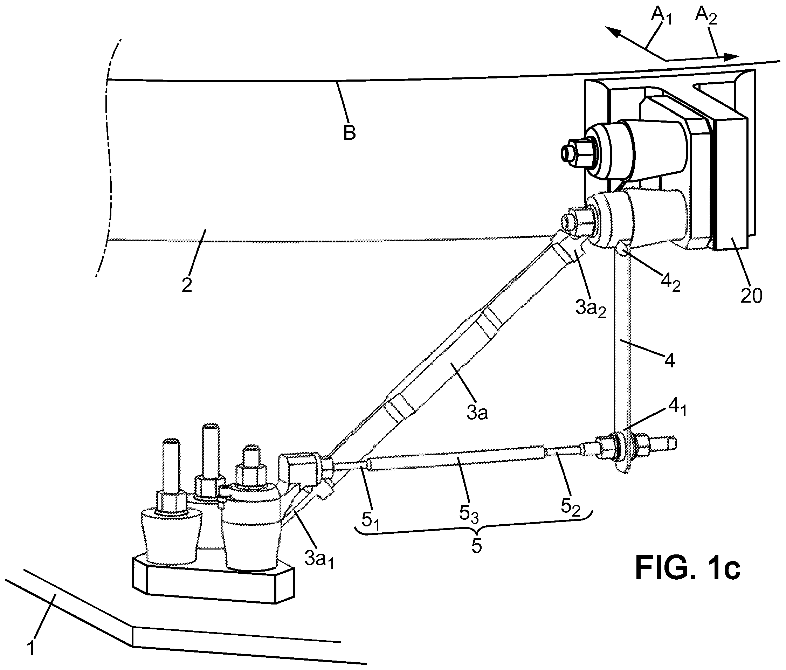

Les références 3 désignent chacune une structure intermédiaire qui relie le miroir 2 au support 1, pour constituer toutes ensemble une liaison rigide du miroir au support. De préférence, le nombre et la conception des structures intermédiaires 3 sont sélectionnés pour constituer une liaison isostatique. Par exemple, trois structures intermédiaires 3 peuvent être utilisées, en étant chacune de type bipode. Ainsi, chaque structure intermédiaire 3 peut comprendre deux segments rigides, qui sont désignés par 3a et 3b. Les deux segments 3a et 3b d'une même structure intermédiaire 3 de type bipode relient chacun un endroit commun du bord B du miroir 2 à deux endroits écartés du support 1. De cette façon, chaque structure intermédiaire 3 constitue un triangle, qui est isocèle lorsque ses deux segments 3a et 3b ont des longueurs identiques. Les matériaux des segments 3a et 3b peuvent être adaptés en fonction de critères mécaniques et thermiques. Par exemple, les segments 3a et 3b peuvent être en un alliage à base de fer (Fe) et de nickel (Ni), tel que connu sous la désignation INVAR^{®}. Comme cela apparaît dans [Fig. 1b] et [Fig. 1c], les deux extrémités de chaque segment 3a sont désignées par les références 3a₁ et 3a₂. De même, les deux extrémités de chaque segment 3b sont désignées par les références 3b₁ et 3b₂. Dans chaque structure intermédiaire 3, les extrémités de segments 3a₁ et 3b₁ sont connectées au support 1, à distance l'une de l'autre pour constituer un bipode. Par exemple, ces extrémités de segments 3a₁ et 3b₁ sont connectées au support 1 chacune en utilisant un mode d'assemblage à boulons et écrous. Pour cet exemple de structure intermédiaire, les extrémités de segments 3a₁ et 3b₁ constituent la première interface de la structure intermédiaire 3, qui est destinée à être connectée au support 1 lorsque l'instrument est assemblé. Les extrémités de segments 3a₂ et 3b₂ sont connectées rigidement au bord B du miroir 2, à un même endroit de ce bord B. Par exemple, elles peuvent être boulonnées ensemble à une équerre de fixation 20 qui est intégrée au miroir 2 au niveau de son bord périphérique B. Les extrémités de segments 3a₂ et 3b₂ dans une même des structures intermédiaires 3 constituent la seconde interface de cette structure intermédiaire, qui est destinée à être connectée au miroir 2 lorsque l'instrument est assemblé. Toutes les structures intermédiaires 3 qui sont utilisées pour relier le miroir 2 au support 1 peuvent être identiques, mais sans que cela soit indispensable à la mise en oeuvre de l'invention.

Selon l'invention, un dispositif de torsion est ajouté à l'une au moins des structures intermédiaires 3. De préférence, un tel dispositif de torsion est ajouté séparément à chacune des structures intermédiaires 3. Il peut être conçu pour produire un moment de torsion, ou une composante non-nulle de moment de torsion, qui est parallèle à l'un des axes A₁ ou A₂, ce moment de torsion étant évalué au niveau de la seconde interface de la structure intermédiaire 3 correspondante. A₁ est un axe qui relie cette seconde interface de la structure intermédiaire au centre C du miroir 2, en étant dirigé vers le centre C, et A₂ est un axe qui est tangent au bord périphérique B du miroir 2 à l'endroit de la structure intermédiaire concernée. Par exemple l'axe A₂ peut être orienté dans le sens direct, aussi dit sens trigonométrique ou antihoraire, autour de la surface réfléchissante du miroir 2. Chaque dispositif de torsion est adapté pour produire le moment de torsion tel que ce moment soit dans le même sens que l'axe A₁ ou A₂, ou dans le sens opposé, ou bien que la composante du moment de torsion selon l'axe A₁ ou A₂ soit positive ou négative.

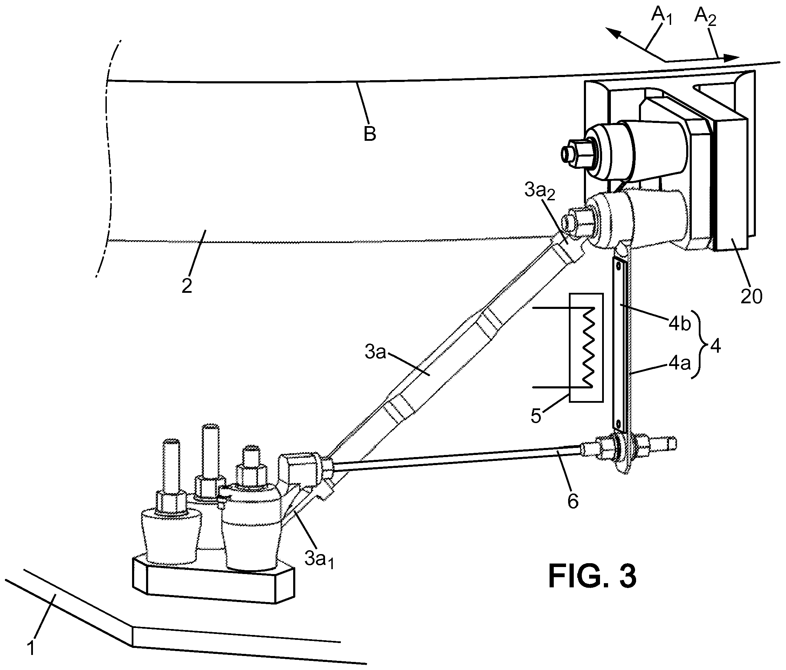

Chaque dispositif de torsion comprend un élément élastique 4, à deux extrémités opposées qui sont désignées par les références 4₁ et 4₂, et un variateur 5. Dans certains modes de réalisation, tels que celui représenté dans [Fig. 1a]-[Fig. 1c], le variateur 5 peut relier l'extrémité 4₁ de l'élément élastique 4 au support 1, ou à un endroit de la structure intermédiaire 3 correspondante qui est proche du support 1. Préférablement, le variateur 5 peut relier l'extrémité 4₁ de l'élément élastique 4 à la première interface de la structure intermédiaire 3. Dans d'autres modes de réalisation, l'extrémité 4₁ de l'élément élastique 4 peut être reliée au support 1, ou à la première interface de la structure intermédiaire 3, indépendamment du variateur 5, et le variateur 5 peut être conçu pour générer une déformation contrôlée de l'élément élastique 4. [Fig. 3] montre un tel autre mode de réalisation, qui sera présenté plus loin. Dans tous les cas, la seconde extrémité 4₂ de l'élément élastique 4 est connectée rigidement à la seconde interface de la structure intermédiaire 3. Par exemple, l'extrémité 4₂ de l'élément élastique 4 et les extrémités de segments 3a₂ et 3b₂ peuvent être boulonnées ensemble au miroir 2. Le variateur 5 est conçu pour contrôler le moment de torsion de sorte que celui-ci soit dans le même sens que l'axe A₁ ou A₂, ou dans le sens inverse, ou ait une composante positive ou négative selon l'axe A₁ ou A₂, lorsque ce moment de torsion est évalué au niveau de la seconde interface de la structure intermédiaire 3 concernée. Dans les modes de réalisation qui sont maintenant décrits en détail en référence à [Fig. 1]-[Fig. 3], l'élément élastique 4 possède une forme allongée entre ses deux extrémités 4₁ et 4₂, mais une telle forme n'est pas indispensable et l'Homme du métier saura identifier des formes alternatives qui sont aussi capables de produire des moments de torsion dont les valeurs sont contrôlables, et qui ont des caractéristiques d'élasticité appropriées.

Dans le mode de réalisation de [Fig. 1a]-[Fig. 1c], la liaison rigide entre la lame qui constitue l'élément élastique 4 et le miroir 2 est conçue pour que la lame soit orientée sensiblement perpendiculairement au bord B du miroir 2, et le variateur 5 est un tirant de longueur ajustable qui relie l'extrémité 4₁ de lame à un point qui est fixe par rapport au support 1. Le tirant qui constitue le variateur 5 peut alors être orienté sensiblement parallèlement au bord B, lorsqu'aucun moment de torsion n'est produit. Par exemple, le tirant peut être constitué de deux segments filetés mâles 5₁ et 5₂, et par un tube fileté femelle 5₃ dans lequel les segments filetés mâles 5₁ et 5₂ peuvent être plus ou moins vissés. Ainsi, une rotation du tube fileté 5₃, qui peut être effectuée manuellement par un opérateur, par exemple, produit un allongement ou un raccourcissement du tirant en fonction du sens de rotation et du nombre de tours. Le segment fileté mâle 5₁ est relié au support 1, et le segment fileté mâle 5₂ est relié à l'extrémité 4₁ de l'élément élastique 4, par exemple en utilisant une combinaison de rondelles concave et convexe. Lorsque le tirant qui constitue le variateur 5 est rallongé ou raccourci, il impose une courbure à la lame qui constitue l'élément élastique 4, avec un moment de torsion qui en résulte au niveau de l'extrémité 4₂. Pour le mode de réalisation représenté, ce moment de torsion est parallèle à l'axe A₁, et est au moins partiellement appliqué au bord B du miroir 2. Il provoque alors une déformation locale de la surface réfléchissante du miroir 2, qui possède une composante de rotation autour de l'axe A₁ dans un voisinage de la structure intermédiaire 3 concernée. Cette composante de rotation locale permet de compenser une aberration optique du miroir 2 qui pourrait être provoquée par le verrouillage de la seconde interface de la structure intermédiaire 3 sur l'équerre 20 du miroir 2. Pour un tel mode de réalisation de l'invention, la lame de l'élément élastique 4 et le tirant du variateur 5 peuvent avantageusement être constitués d'un même alliage que les segments 3a et 3b de chaque structure intermédiaire 3. En effet, dans ces conditions, la valeur de chaque moment de torsion qui est appliqué au miroir 2 peut être sensiblement indépendante de la température d'utilisation de l'instrument, ou présenter une dépendance réduite par rapport à cette température.

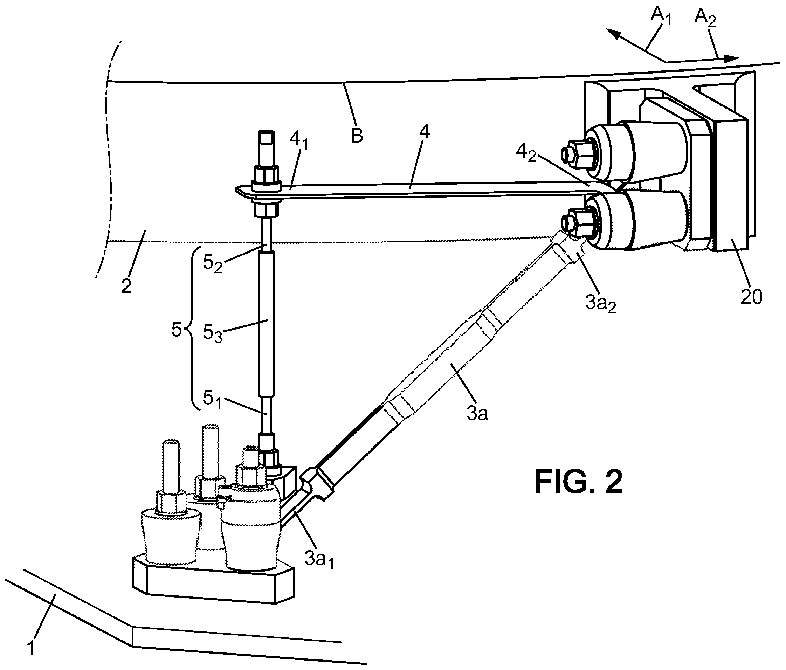

[Fig. 2] correspond à [Fig. 1c] pour une autre disposition de la lame de l'élément élastique 4 et du tirant du variateur 5 : la lame est sensiblement parallèle au bord B du miroir 2 à l'endroit de la structure intermédiaire 3 considérée, et le tirant peut être orienté sensiblement perpendiculaire au bord B, lorsqu'aucun moment de torsion n'est produit. Le fonctionnement du dispositif de torsion est alors similaire à celui qui a été décrit en liaison avec [Fig. 1c].

L'utilisation d'un tirant tel que décrit précédemment est adaptée pour une opération de compensation d'aberration optique qui est effectuée manuellement par un opérateur. De tels modes de réalisation sont donc appropriés pour des instruments qui sont accessibles à un opérateur au moment où l'opération est effectuée. Tel est le cas pour un télescope qui est installé à bord d'un satellite, et pour lequel l'opération de compensation d'aberration optique est effectuée sur Terre, par exemple pendant l'intégration du satellite.

Dans d'autres modes de réalisation de l'invention, le tirant à actionnement manuel qui constitue le variateur 5 peut être remplacé par un tirant à commande électrique, qui peut par exemple incorporer un moteur pas-à-pas. Dans ce cas, chaque dispositif de torsion peut comprendre en outre une partie d'un contrôleur (non-représenté), qui permet de contrôler la longueur du tirant. De tels autres modes de réalisation peuvent permettre d'ajuster la valeur de chaque moment de torsion à distance, y compris une fois que le satellite porteur de l'instrument a été mis en orbite.

[Fig. 3] montre encore un autre mode de réalisation possible de l'invention, dans lequel l'élément élastique 4 est constituée par un assemblage bilame qui s'étend entre les extrémités 4₁ et 4₂. De tels assemblages bilames sont connus de l'Homme du métier, et sont constitués par deux lames d'alliages différents, qui sont connectées rigidement l'une à l'autre au niveau des extrémités 4₁ et 4₂. Les deux lames sont désignées par les références 4a et 4b. Les alliages respectifs des deux lames 4a et 4b sont sélectionnés pour avoir des valeurs différentes de coefficient de dilatation thermique. Leur extrémité commune 4₂ est encore connectée rigidement au miroir 2, et leur autre extrémité commune, correspondant à la référence 4₁, peut être connectée à un point qui est fixe par rapport au support 1 par une tige de longueur constante 6. Alors, le variateur 5 peut être constitué par un système chauffant qui est disposé pour varier la température de l'assemblage bilame 4a-4b. Il peut comprendre notamment au moins un élément chauffant, par exemple à base d'au moins une résistance électrique ou d'un élément radiatif. Lorsque cet élément chauffant est activé, l'assemblage bilame 4a-4b se déforme en se courbant et en prenant appui sur l'extrémité de la tige de longueur constante 6. Il produit alors, par réaction, un moment de torsion au niveau de son extrémité 4₂. Dans [Fig. 3], la représentation de l'assemblage bilame 4a-4b en traits continus peut correspondre à l'application au miroir 2 d'un couple de torsion d'une valeur et d'un signe déterminés, et le profil en traits interrompus qui est indiqué pour l'assemblage bilame 4a-4b peut correspondre à l'application au miroir 2 d'une autre valeur pour le moment de torsion, avec un signe qui peut être opposé.

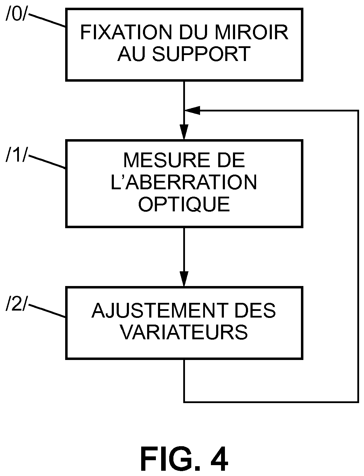

La mise en oeuvre des dispositifs de torsion est décrite maintenant en référence à [Fig. 4]. Le miroir 2 a été fixé rigidement au support 1 au moyens des structures intermédiaires 3 lors d'une étape préalable notée /0/. Cette étape /0/ est effectuée sur Terre, par exemple lors de l'intégration du télescope dans un satellite. Les étapes /1/ et 121 du procédé de l'invention peuvent ensuite être effectuées aussi sur Terre, par exemple lors d'étapes additionnelles de l'intégration du télescope au satellite. Alternativement, les étapes /1/ et 121 peuvent être effectuées dans les conditions d'utilisation du télescope, c'est-à-dire une fois que le satellite a été mis en orbite. Les ajustements qui sont alors appliqués aux variateurs 5 prennent directement en compte les conditions réelles d'utilisation du télescope, notamment l'intensité du champ de gravitation qui est effective pendant cette utilisation.

L'étape /1/ consiste à caractériser au moins une aberration optique du télescope, par exemple un astigmatisme, qui résulte d'une différence entre la forme réelle du miroir 2 et sa forme nominale. Toutefois, d'autres aberrations optiques du télescope peuvent être caractérisées alternativement ou en plus de l'astigmatisme, telles que des aberrations en trèfle. Plusieurs méthodes peuvent être utilisées pour ces caractérisations d'aberrations optiques, qui sont connues de l'Homme du métier si bien qu'il n'est pas nécessaire de les répéter dans la présente description. Par exemple, des dispositifs spécifiques peuvent être utilisés pour caractériser la forme de front d'onde qui résulte de la réflexion sur le miroir 2 d'un rayonnement provenant d'une source lointaine.

Une unité de calcul (non-représentée) peut alors déterminer des déformations du miroir 2, à produire par les dispositifs de torsion décrits plus hauts, pour compenser au moins partiellement certaines des aberrations optiques qui ont été caractérisées à l'étape /1/. L'unité de calcul détermine ensuite les valeurs des moments de torsion qui sont nécessaires pour générer ces déformations, puis les modifications de longueur à appliquer aux éléments élastiques 4 de [Fig. 1a]-[Fig. 1c] ou [Fig. 2] pour produire ces valeurs de moments de torsion. Pour le mode de réalisation de [Fig. 3], l'unité de calcul détermine la température de chaque assemblage bilame 4a-4b, qui est nécessaire pour produire la valeur voulue de moment de torsion. Enfin, à l'étape /2/, les variateurs 5 sont ajustés manuellement ou par des commandes dédiées conformément aux valeurs déterminées par l'unité de calcul.

Possiblement, la séquence des étapes /1/ et 121 peut être répétée une ou plusieurs fois pour améliorer progressivement la compensation des aberrations optiques du télescope.

Typiquement, chaque moment de torsion à appliquer peut être de l'ordre de quelques Newton-mètre (N·m), ou inférieur à 1 N·m. Il est ainsi possible de tourner la surface optique du miroir 2 de quelques dizaines de nanomètres (nm) localement dans un voisinage de chaque structure intermédiaire 3, autour d'une direction qui est parallèle à la surface optique du miroir.

Il est entendu que l'invention peut être reproduite en modifiant des aspects secondaires des modes de réalisation qui ont été décrits en détail ci-dessus, tout en conservant certains au moins des avantages cités. Notamment, chaque structure intermédiaire, l'élément élastique et le variateur de chaque dispositif de torsion peuvent avoir des conceptions et des configurations différentes de celles représentées dans les figures. De même, le miroir auquel l'invention est appliquée peut être dépourvu d'ouverture centrale, tous les matériaux qui ont été cités ne l'ont été qu'à titre d'exemples non-limitatifs et peuvent être changés en fonction de la conception de l'instrument, et toutes les valeurs numériques qui ont été citées ne l'ont été aussi qu'à titre d'illustration, et peuvent être changées en fonction de l'application considérée. Enfin, l'instrument auquel l'invention est appliquée peut avoir une fonction quelconque, et être destiné à des conditions quelconques d'utilisation, pas nécessairement à bord d'un satellite. Par exemple, il peut être destiné à collecter du rayonnement radiofréquence, et être installé sur Terre en étant supporté par une structure fixe.

## Revendications

1. Système de fixation d'un miroir (2) sur un support (1) dudit miroir, comprenant les composants suivants :
- au moins trois structures intermédiaires (3), destinées chacune à être connectée au support (1) par une première interface de la structure intermédiaire, et à être connectée rigidement au miroir (2) par une seconde interface de la structure intermédiaire, de façon à ce que les au moins trois structures intermédiaires réalisent ensemble une fixation rigide du miroir au support, les structures intermédiaires étant réparties angulairement autour d'un centre (C) du miroir en étant distantes dudit centre,
**caractérisé en ce que** le système de fixation comprend en outre au moins un dispositif de torsion, chaque dispositif de torsion étant dédié à une seule des structures intermédiaires (3) et comprenant :
- au moins un élément élastique (4), qui possède deux extrémités (4₁, 4₂), une première desdites extrémités étant reliée à la première interface de la structure intermédiaire (3), et une seconde desdites extrémités étant reliée rigidement à la seconde interface de ladite structure intermédiaire, l'élément élastique étant agencé pour appliquer un moment de torsion au miroir (2), directement audit miroir ou à travers la seconde interface de la structure intermédiaire ; et
- un variateur (5), qui est couplé à l'élément élastique (4) de façon à modifier une valeur du moment de torsion appliqué au miroir (2) directement ou à travers la seconde interface de la structure intermédiaire (3).

2. Système de fixation selon la revendication 1, dans lequel chaque élément élastique (4) comprend une lame qui s'étend entre la première et la seconde extrémité (4₁, 4₂) dudit élément élastique (4),
et le variateur (5) est agencé pour déplacer la première extrémité (4₁) de façon à produire une déformation de la lame par flexion, la déformation par flexion produisant, au niveau de la seconde extrémité (4₂), le moment de torsion qui est appliqué au miroir (2).

3. Système de fixation selon la revendication 2, dans lequel un matériau de l'élément élastique (4) de chaque dispositif de torsion est identique à un matériau de la structure intermédiaire (3) à laquelle ledit dispositif de torsion est dédié.

4. Système de fixation selon l'une quelconque des revendications 1 à 3, dans lequel chaque variateur (5) possède un fonctionnement mécanique ou à base d'au moins une cellule piézoélectrique, pour déplacer la première extrémité (4₁) de l'élément élastique (4) par rapport au support (1).

5. Système de fixation selon la revendication 4, dans lequel chaque variateur (5) possède un fonctionnement mécanique adapté pour être actionné manuellement, ou bien ledit variateur est adapté pour être actionné à distance par l'intermédiaire d'une commande électrique adressée audit variateur.

6. Système de fixation selon la revendication 1, dans lequel chaque élément élastique (4) comprend un assemblage bilame (4a, 4b) à déformation thermique qui s'étend entre la première et la seconde extrémité (4₁, 4₂) dudit élément élastique,
et le variateur (5) est adapté pour appliquer une variation de température à l'assemblage bilame (4a, 4b), de sorte que ledit assemblage bilame produise, au niveau de la seconde extrémité (4₂), le moment de torsion qui est appliqué au miroir (2) en réponse à la variation de température.

7. Système de fixation selon l'une quelconque des revendications précédentes, comprenant deux ou trois structures intermédiaires (3) qui sont munies chacune d'un dispositif de torsion indépendant du dispositif de torsion de chaque autre structure intermédiaire.

8. Système de fixation selon l'une quelconque des revendications précédentes, dans lequel chaque dispositif de torsion est agencé de sorte que le moment de torsion qui est appliqué au miroir en étant généré par ledit dispositif de torsion, est parallèle à un premier axe (A₁) qui est dirigé vers le centre (C) du miroir (2), ou parallèle à un second axe (A₂) qui est tangent à un bord périphérique (B) du miroir, à un endroit du miroir qui est le plus proche de la structure intermédiaire (3) à laquelle est dédié ledit dispositif de torsion.

9. Système de fixation selon l'une quelconque des revendications précédentes, dans lequel chaque structure intermédiaire (3) est connectée au miroir (2), par la seconde interface de ladite structure intermédiaire, au niveau du bord périphérique (B) du miroir, et ladite seconde interface est adaptée pour appliquer le moment de torsion sur ledit bord périphérique du miroir.

10. Instrument d'optique ou de collecte de rayonnement, comprenant un miroir (2), un support (1), et un système de fixation qui est conforme à l'une quelconque des revendications 1 à 9, ledit système de fixation connectant rigidement le miroir au support.

11. Instrument d'optique selon la revendication 10, formant un télescope, et dans lequel le miroir (2) qui est connecté au support (1) par le système de fixation est un miroir primaire du télescope.

12. Procédé d'ajustement d'un instrument d'optique ou de collecte de rayonnement, suivant lequel ledit instrument comprend un miroir (2), un support (1), et un système de fixation qui est conforme à l'une quelconque des revendications 1 à 9,
le miroir (2) étant fixé rigidement sur le support (1) au moyen des structures intermédiaires (3),
le procédé comprenant d'exécuter au moins une fois une séquence qui comprend les étapes suivantes :
/1/ caractériser au moins une aberration optique de l'instrument qui résulte au moins partiellement d'un écart de forme du miroir (2), par rapport à une forme de référence identifiée pour ledit miroir ; et
/2/ pour au moins l'une des structures intermédiaires (3), ajuster le variateur (5) du dispositif de torsion qui est dédié à ladite structure intermédiaire, de façon à réduire ladite au moins une aberration optique de l'instrument.

13. Procédé selon la revendication 12, suivant lequel l'aberration optique qui est réduite en exécutant l'étape 121 comprend au moins un astigmatisme de l'instrument, un trèfle de l'instrument, ou une combinaison d'un astigmatisme et d'un trèfle de l'instrument.

14. Procédé selon la revendication 12 ou 13, suivant lequel l'instrument d'optique ou de collecte de rayonnement est installé à bord d'un satellite, et suivant lequel la séquence qui comprend les étapes /1/ et 121 est exécutée pendant une intégration de l'instrument dans le satellite, sur Terre avant un lancement dudit satellite, et/ou exécutée ou répétée à bord du satellite après que ledit satellite a été placé en orbite autour de la Terre.

## Patentansprüche

1. System zur Befestigung eines Spiegels (2) an einem Träger (1) des Spiegels, welches die folgenden Komponenten umfasst:
- wenigstens drei Zwischenstrukturen (3), die jeweils dazu bestimmt sind, mit dem Träger (1) durch eine erste Schnittstelle der Zwischenstruktur verbunden zu werden und mit dem Spiegel (2) durch eine zweite Schnittstelle der Zwischenstruktur starr verbunden zu werden, derart, dass die wenigstens drei Zwischenstrukturen zusammen eine starre Befestigung des Spiegels am Träger bewirken, wobei die Zwischenstrukturen um einen Mittelpunkt (C) des Spiegels winkelmäßig verteilt sind und dabei vom Mittelpunkt entfernt sind,
**dadurch gekennzeichnet, dass** das System zur Befestigung außerdem wenigstens eine Torsionsvorrichtung umfasst, wobei jede Torsionsvorrichtung für eine einzige der Zwischenstrukturen (3) vorgesehen ist und umfasst:
- wenigstens ein elastisches Element (4), welches zwei Enden (4₁, 4₂) besitzt, wobei ein erstes der Enden mit der ersten Schnittstelle der Zwischenstruktur (3) verbunden ist und ein zweites der Enden mit der zweiten Schnittstelle der Zwischenstruktur starr verbunden ist, wobei das elastische Element dazu eingerichtet ist, ein Torsionsmoment auf den Spiegel (2) auszuüben, direkt auf den Spiegel oder über die zweite Schnittstelle der Zwischenstruktur; und
- einen Variator (5), welcher mit dem elastischen Element (4) gekoppelt ist, um einen Wert des Torsionsmoments zu verändern, das direkt oder über die zweite Schnittstelle der Zwischenstruktur (3) auf den Spiegel (2) ausgeübt wird.

2. System zur Befestigung nach Anspruch 1, wobei jedes elastische Element (4) eine Lamelle umfasst, welche sich zwischen dem ersten end dem zweiten Ende (4₁, 4₂) des elastischen Elements (4) erstreckt,
und der Variator (5) dazu eingerichtet ist, das erste Ende (4₁) so zu verlagern, dass eine Verformung der Lamelle durch Biegung erzeugt wird, wobei die Verformung durch Biegung am zweiten Ende (4₂) das Torsionsmoment erzeugt, welches auf den Spiegel (2) ausgeübt wird.

3. System zur Befestigung nach Anspruch 2, wobei ein Material des elastischen Elements (4) jeder Torsionsvorrichtung mit einem Material der Zwischenstruktur (3) identisch ist, für welche die Torsionsvorrichtung vorgesehen ist.

4. System zur Befestigung nach einem der Ansprüche 1 bis 3, wobei jeder Variator (5) eine mechanische oder auf wenigstens einer piezoelektrischen Zelle basierende Funktionsweise besitzt, um das erste Ende (4₁) des elastischen Elements (4) in Bezug auf den Träger (1) zu verlagern.

5. System zur Befestigung nach Anspruch 4, wobei jeder Variator (5) eine mechanische Funktionsweise besitzt, die manuell betätigbar ist, oder der Variator über einen an den Variator adressierten elektrischen Befehl fernbetätigbar ist.

6. System zur Befestigung nach Anspruch 1, wobei jedes elastische Element (4) eine thermisch verformbare Bimetallanordnung (4a, 4b) umfasst, welche sich zwischen dem ersten und dem zweiten Ende (4₁, 4₂) des elastischen Elements erstreckt,
und der Variator (5) dafür ausgelegt ist, eine Temperaturänderung auf die Bimetallanordnung (4a, 4b) einwirken zu lassen, so dass die Bimetallanordnung am zweiten Ende (4₂) in Reaktion auf die Temperaturänderung das Torsionsmoment erzeugt, welches auf den Spiegel (2) ausgeübt wird.

7. System zur Befestigung nach einem der vorhergehenden Ansprüche, welches zwei oder drei Zwischenstrukturen (3) umfasst, welche jeweils mit einer Torsionsvorrichtung ausgestattet sind, die von der Torsionsvorrichtung jeder anderen Zwischenstruktur unabhängig ist.

8. System zur Befestigung nach einem der vorhergehenden Ansprüche, wobei jede Torsionsvorrichtung so angeordnet ist, dass das Torsionsmoment, welches auf den Spiegel ausgeübt wird, wenn es von der Torsionsvorrichtung erzeugt wird, parallel zu einer ersten Achse (A₁) ist, welche zum Mittelpunkt (C) des Spiegels (2) gerichtet ist, oder parallel zu einer zweiten Achse (A₂), welche an einer Stelle des Spiegels tangential zu einem Umfangsrand (B) des Spiegels ist, die der Zwischenstruktur (3), für welche die Torsionsvorrichtung vorgesehen ist, am nächsten ist.

9. System zur Befestigung nach einem der vorhergehenden Ansprüche, wobei jede Zwischenstruktur (3) durch die zweite Schnittstelle der Zwischenstruktur am Umfangsrand (B) des Spiegels mit dem Spiegel (2) verbunden ist und die zweite Schnittstelle dafür ausgelegt ist, das Torsionsmoment auf den Umfangsrand des Spiegels auszuüben.

10. Optisches Instrument oder Instrument zum Sammeln von Strahlung, welches einen Spiegel (2), einen Träger (1) und ein System zur Befestigung, welches einem der Ansprüche 1 bis 9 entspricht, umfasst, wobei das System zur Befestigung den Spiegel starr mit dem Träger verbindet.

11. Optisches Instrument nach Anspruch 10, welches ein Teleskop bildet, und wobei der Spiegel (2), welcher mit dem Träger (1) durch das System zur Befestigung verbunden ist, ein Primärspiegel des Teleskops ist.

12. Verfahren zur Einstellung eines optischen Instruments oder Instruments zum Sammeln von Strahlung, gemäß dem das Instrument einen Spiegel (2), einen Träger (1) und ein System zur Befestigung, welches einem der Ansprüche 1 bis 9 entspricht, umfasst,
wobei der Spiegel (2) mittels der Zwischenstrukturen (3) starr am Träger (1) befestigt ist,
wobei das Verfahren die Ausführung wenigstens eines Ablaufs umfasst, welcher die folgenden Schritte umfasst:
/1/ Charakterisieren wenigstens einer optischen Aberration des Instruments, welche wenigstens teilweise aus einer Formabweichung des Spiegels (2) in Bezug auf eine für den Spiegel identifizierte Referenzform resultiert; und
/2/ für wenigstens eine der Zwischenstrukturen (3), Einstellen des Variators (5) der Torsionsvorrichtung, welche für diese Zwischenstruktur vorgesehen ist, um die wenigstens eine optische Aberration des Instruments zu reduzieren.

13. Verfahren nach Anspruch 12, gemäß dem die optische Aberration, welche durch Ausführen von Schritt 121 reduziert wird, wenigstens einen Astigmatismus des Instruments, eine kleeblattförmige Aberration des Instruments oder eine Kombination eines Astigmatismus und einer kleeblattförmigen Aberration des Instruments umfasst.

14. Verfahren nach Anspruch 12 oder 13, gemäß dem das optische Instrument oder Instrument zum Sammeln von Strahlung an Bord eines Satelliten installiert ist und gemäß dem der Ablauf, welcher die Schritte /1/ und 121 umfasst, während eines Einbaus des Instruments in den Satelliten auf der Erde vor dem Start des Satelliten ausgeführt wird und/oder an Bord des Satelliten ausgeführt oder wiederholt wird, nachdem der Satellit in eine Umlaufbahn um die Erde gebracht worden ist.

## Claims

1. A fastening system for fastening a mirror (2) to a support (1) of said mirror, comprising the following components:
- at least three intermediate structures (3), each intended to be connected to the support (1) by a first interface of the intermediate structure, and to be rigidly connected to the mirror (2) by a second interface of the intermediate structure, so that the at least three intermediate structures perform together a rigid fastening of the mirror to the support, the intermediate structures being angularly distributed about a center (C) of the mirror while being apart from said centre,
**characterised in that** the fastening system further comprises at least one torsion device, each torsion device being dedicated to a single one of the intermediate structures (3) and comprising:
- at least one elastic element (4), which has two ends (4₁, 4₂), a first of said ends being connected to the first interface of the intermediate structure (3), and a second of said ends being rigidly connected to the second interface of said intermediate structure, the elastic element being arranged to apply a torque to the mirror (2), directly to said mirror or through the second interface of the intermediate structure; and
- a variator (5), which is coupled to the elastic element (4) so as to modify a value of the torque applied to the mirror (2) directly or through the second interface of the intermediate structure (3).

2. The fastening system according to claim 1, wherein each elastic element (4) comprises a strip which extends between the first and second ends (4₁, 4₂) of said elastic element (4),
and the variator (5) is arranged to move the first end (4₁) so as to produce a bending deformation of the strip, the bending deformation producing, at the second end (4₂), the torque which is applied to the mirror (2).

3. The fastening system according to claim 2, wherein a material of the elastic element (4) of each torsion device is identical to a material of the intermediate structure (3) to which said torsion device is dedicated.

4. The fastening system according to any one of claims 1 to 3, wherein each variator (5) has a mechanical operation or an operation based on at least one piezoelectric cell, for moving the first end (4₁) of the elastic element (4) relative to the support (1).

5. The fastening system according to claim 4, wherein each variator (5) has a mechanical operation suitable for manual actuation, or said variator is suitable for remote actuation by means of an electrical command sent to said variator.

6. The fastening system according to claim 1, wherein each elastic element (4) comprises a thermal deformation bimetallic strip assembly (4a, 4b) which extends between the first and second ends (4₁, 4₂) of said elastic element,
and the variator (5) is adapted for applying a temperature variation to the bimetallic strip assembly (4a, 4b), such that said bimetallic strip assembly produces, at the second end (4₂), the torque which is applied to the mirror (2) in response to the temperature variation.

7. The fastening system according to any one of the preceding claims, comprising two or three intermediate structures (3) which are each provided with a torsion device independent of the torsion device of each other intermediate structure.

8. The fastening system according to any one of the preceding claims, wherein each torsion device is arranged so that the torque which is applied to the mirror by being generated by said torsion device, is parallel to a first axis (A₁) which is directed towards the center (C) of the mirror (2), or parallel to a second axis (A₂) which is tangent to a peripheral edge (B) of the mirror, at a location of the mirror which is closest to the intermediate structure (3) to which said torsion device is dedicated.

9. The fastening system according to any one of the preceding claims, wherein each intermediate structure (3) is connected to the mirror (2) by the second interface of said intermediate structure, at the peripheral edge (B) of the mirror, and said second interface is adapted for applying the torque onto said peripheral edge of the mirror.

10. A radiation collecting or optical instrument, comprising a mirror (2), a support (1), and a fastening system which is in accordance with any one of claims 1 to 9, said fastening system rigidly connecting the mirror to the support.

11. The optical instrument according to claim 10, forming a telescope, and wherein the mirror (2) which is connected to the support (1) by the fastening system is a primary mirror of the telescope.

12. A method for adjusting a radiation collecting or optical instrument, wherein said instrument comprises a mirror (2), a support (1), and a fastening system which is in accordance with any one of claims 1 to 9,
the mirror (2) being rigidly fastened to the support (1) by means of the intermediate structures (3),
the method comprising executing at least once a sequence which comprises the following steps:
/1/ characterising at least one optical aberration of the instrument which at least partially results from a deviation in a shape of the mirror (2), relative to a reference shape identified for said mirror; and
/2/ for at least one of the intermediate structures (3), adjusting the variator (5) of the torsion device which is dedicated to said intermediate structure, so as to reduce said at least one optical aberration of the instrument.

13. The method according to claim 12, wherein the optical aberration which is reduced by executing step 121 comprises at least an astigmatism of the instrument, a trefoil of the instrument, or a combination of an astigmatism and a trefoil of the instrument.

14. The method according to claim 12 or 13, wherein the radiation collecting or optical instrument is installed on board a satellite, and wherein the sequence which comprises steps /1/ and 121 is executed during an integration of the instrument into the satellite, on Earth before launching said satellite, and/or executed or repeated on board the satellite after said satellite has been placed in orbit around the Earth.
